# EUROPEAN PATENT APPLICATION

(11) **EP 2 284 683 A2**
(43) Date of publication of application: **16.02.2011**
(21) Application number: 10162047.4
(22) Date of filing: 05.05.2010
(51) Int. Cl.: G06F 3/12

(54) **Host apparatus connectable to image forming apparatuses and rearrangement setting method thereof**

(30) Priority: 31.07.2009 KR 20090070728
(71) Applicant: Samsung Electronics Co., Ltd., Suwon-si, Gyeonggi-do (KR)
(72) Inventor: Kong, Tae-kook, Gyeonggi-do (KR)
(74) Representative: Walaski, Jan Filip

(57) **Abstract**

Disclosed are a host apparatus which is connected to a plurality of image forming apparatuses and a rearrangement setting method thereof. The rearrangement setting method includes displaying on a host apparatus a current arrangement drawing of the plurality of image forming apparatuses and an arrangement management window of the plurality of image forming apparatuses; inputting a rearrangement attribute value at the arrangement management window to rearrange at least one of the plurality of image forming apparatuses; performing a simulation according to the input rearrangement attribute value to rearrange the image forming apparatus; and rearranging the image forming apparatus according to a result of the simulation. With this, a host apparatus and a rearrangement setting method may efficiently rearrange at least one of the plurality of image forming apparatuses in a proper location based on usage amount information of the plurality of image forming apparatuses.

## Description

The present invention relate to a host apparatus which is connectable to a plurality of image forming apparatuses and a rearrangement setting method thereof, and more particularly, to a host apparatus connectable to a plurality of image forming apparatuses to rearrange the image forming apparatuses based on usage amount information of a plurality of groups classified by a predetermined standard and a rearrangement setting method thereof.

An image forming apparatus forms an image on a print paper. The image forming apparatus may include a printer, a photocopier, a facsimile, a multi-function device which has at least two functions, etc.

Recently, demand for an image forming apparatus as an office automation device performing not only a document print function but also a scanning function and a faxing function has increased. Accordingly, the image forming apparatus has extended its original functions to perform various functions with high performance.

Meanwhile, solutions are provided to manage locations of a plurality of image forming apparatuses, which is connected in a network, in an office arrangement.
A solution which manages the arrangement of the image forming apparatuses displays an office layout file on a screen and arranges the image forming apparatuses in a desired location by drag and drop, for example.

Generally, a plurality of image forming apparatuses are used in an office. Thus, it is preferable to prevent usage amount of print and copy functions from being concentrated on a particular image forming apparatus.

However, the conventional arrangement solution is convenient only in arranging the image forming apparatus in a location according to the office layout displayed on the screen, and does not determine whether the arrangement is proper according to the usage amount of the image forming apparatus.

If the arrangement of the image forming apparatus is not proper, a user may go through trial and error repeatedly until finding the proper location. Also, if conditions are changed like a change in the office arrangement or a sharp rise in the usage amount of some image forming apparatuses, an efficient rearrangement of the image forming apparatuses is difficult.

Accordingly, it is an aspect of the present embodiments to provide a host apparatus connected to a plurality of image forming apparatuses to efficiently rearrange the plurality of image forming apparatuses in a proper location based on usage amount information of the image forming apparatuses and a rearrangement setting method thereof.

Also, it is another aspect of the present embodiments to provide a host apparatus connected to a plurality of image forming apparatuses to automatically rearrange the plurality of image forming apparatuses to thereby minimize a difference between usage rates of a plurality of groups in which the plurality of image forming apparatuses is classified by a predetermined standard and a rearrangement setting method thereof.

Additional aspects and/or advantages will be set forth in part in the description which follows and, in part, will be obvious from the description, or may be learned by practice of the present invention.

The foregoing and/or other aspects are also achieved by providing a rearrangement setting method for a plurality of image forming apparatuses of a host apparatus connected to the plurality of image forming apparatuses, the method including: displaying at the host apparatus a current arrangement drawing of the plurality of image forming apparatuses and an arrangement management window of the plurality of image forming apparatuses; inputting a rearrangement attribute value at the arrangement management window to rearrange at least one of the plurality of image forming apparatuses; performing a simulation according to the input rearrangement attribute value to rearrange the at least one image forming apparatus; and rearranging the at least one image forming apparatus according to a result of the simulation and displaying the result of the simulation.

The rearrangement attribute value may include at least one of a permitted usage rate, a simulation duration, a simulation period, a number of simulations, a group including at least one of the image forming apparatuses, an operation option of the at least one image forming apparatus, and a number of image forming apparatuses permitted to be rearranged.

The rearrangement may be performed with respect to an image forming apparatus group which has a lower usage rate than a permitted usage rate among a plurality of image forming apparatus groups or than the image forming apparatuses within the image forming apparatus groups having a lower usage rate than the permitted usage rate.

The rearrangement of the image forming apparatus group having the lower usage rate than the permitted usage rate may include rearranging at least one of the image forming apparatuses within the image forming apparatus group having the lower usage rate, in an image forming apparatus group having a higher usage rate than the image forming apparatus group having the lower usage rate.

When there are multiple rearrangement target image forming apparatuses, selected image forming apparatuses may be rearranged.

The simulation may be performed according to an input number of simulations until the input permitted usage rate is satisfied.

The rearranging may include separately displaying at least one of locations of at least one of the image forming apparatuses before and after the rearrangement, an available location of the at least one image forming apparatus, inherent information of the at least one image forming apparatus, and usage amount information of the at least one image forming apparatus.

The method may further include monitoring the at least one image forming apparatus according to the input rearrangement attribute value; and notifying a monitoring result.

The foregoing and/or other aspects are achieved by providing a host apparatus which is connected to a plurality of image forming apparatuses, the host apparatus including: a display unit which displays thereon a current arrangement drawing of the plurality of image forming apparatuses and an arrangement management window of the plurality of image forming apparatuses; a user interface unit receiving as input a rearrangement attribute value through the arrangement management window to rearrange at least one of the plurality of image forming apparatuses; a storage unit which stores therein the input rearrangement attribute value; and a controller which performs a simulation according to the input rearrangement attribute value to rearrange the at least one image forming apparatus, rearranges the at least one image forming apparatus according to a result of the simulation and controls the display unit to display a rearrangement result thereon.

The rearrangement attribute value may include at least one of a permitted usage rate, a simulation duration, a simulation period, a number of simulations, a group including at least one of the image forming apparatuses, an operation option of the at least one image forming apparatus, and a number of image forming apparatuses permitted to be rearranged.

The controller may rearrange an image forming apparatus group which has a lower usage rate than a permitted usage rate among the plurality of image forming apparatus groups or than the image forming apparatuses within the image forming apparatus groups having the lower usage rate than the permitted usage rate.

The rearrangement of the image forming apparatus group which has the lower usage rate than the permitted usage rate may include rearranging at least one of the image forming apparatuses within the image forming apparatus group having the lower usage rate, in an image forming apparatus group having a higher usage rate than the image forming apparatus group having the lower usage rate.

When there are multiple rearrangement target image forming apparatuses, selected image forming apparatuses may be rearranged.

The controller may perform the simulation according to an input number of simulations until the input permitted usage rate is satisfied.

The display unit may separately display at least one of locations of at least one of the image forming apparatuses before and after the rearrangement, an available location of the at least one image forming apparatus, inherent information of the at least one image forming apparatus, and usage amount information of the at least one image forming apparatus.

The host apparatus may further include a communication unit, and the controller may monitor the at least one image forming apparatus according to the input rearrangement attribute value, and controls the communication unit to notify a monitoring result.

The foregoing and/or other aspects are achieved by providing a rearrangement setting method for at least one image forming apparatus, the method including: displaying at a host apparatus connected to the at least one image forming apparatus included in a first image forming apparatus group a rearrangement window of the at least one image forming apparatus; performing a simulation of rearranging the at least one image forming apparatus to a second image forming apparatus group based on a usage rate of at least one of the image forming apparatus groups; and displaying a result of the simulation at the rearrangement window of the host apparatus.

The at least one image forming apparatus may be moved to the second image forming apparatus group based on a usage rate of the first image forming apparatus group in relation to a usage rate of the second image forming apparatus group to reduce a difference between the usage rates of the image forming apparatus groups. The usage rate of the first image forming apparatus group may be less than the usage rate of the second image forming apparatus group.

The at least one image forming apparatus in the first image forming apparatus group having a lower usage rate than the second image forming apparatus group may be a first image forming apparatus moved to be adjacent to a second image forming apparatus having a highest usage amount along image forming apparatuses in the second image forming apparatus group having a higher usage rate than that of the first image forming apparatus group.

The at least one image forming apparatus may be moved to another image forming apparatus group based on whether a usage rate of one of the image forming apparatus groups is lower than a permitted usage rate of another image forming apparatus group to increase the usage rate of the group having the usage rate that is lower than the permitted usage rate.

The above and/or other aspects will become apparent and more readily appreciated from the following description of the embodiments, taken in conjunction with the accompanying drawings in which:
FIG. 1 is a block diagram of a host apparatus and an image forming system including the same according to an exemplary embodiment;
FIGS. 2 to 6 illustrate an example of an arrangement management window according to the exemplary embodiment;
FIG. 7 illustrates a simulation result window for usage rates of groups with respect to a plurality of arrangements settings;
FIG. 8 illustrates an arrangement management window according to another exemplary embodiment; and
FIGS. 9 and 10 are flowcharts which illustrate a rearrangement setting method of the plurality of image forming apparatuses of the host apparatus according to the exemplary embodiment.

Hereinafter, exemplary embodiments will be described with reference to accompanying drawings, wherein like numerals refer to like elements and repetitive descriptions will be avoided as necessary.

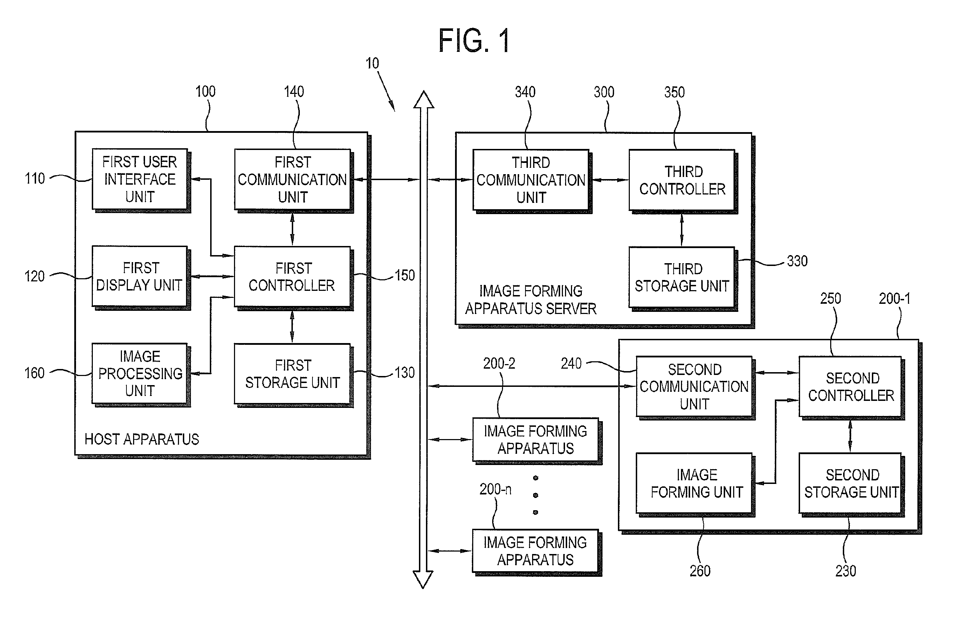

FIG. 1 is a block diagram of an image forming system 10 including a host apparatus 100 according to an exemplary embodiment.

As shown therein, the image forming system 10 according to the present embodiment may include a host apparatus 100, a plurality of image forming apparatuses 200-1, 200-2, ... and 200-n and an image forming apparatus server 300. The image forming apparatus server 300 may be provided separately, or included in the host apparatus 100 or omitted.

According to the exemplary embodiment, if the image forming apparatus server 300 is omitted, the host apparatus 100 is connected to the plurality of image forming apparatuses 200-1, 200-2, ... and 200-n and receives various information including usage amount information from the plurality of image forming apparatuses 200-1, 200-2, ... and 200-n.

The host apparatus 10 may include a personal computer (PC). The image forming apparatuses 200-1, 200-2, ... and 200-n may include a printer or a multi-function device performing at least two functions, which includes an image forming unit 260 performing a print operation according to a print command and connectable by a network, a local connection, a USB, parallel, UNC, etc.

Here, the print operation includes a print operation to copy a document after scanning, a print operation for received fax data and a print operation for print data received from the outside through the host apparatus 100 including a server or print data stored in an inside (HDD) or outside (USD memory stick) of the image forming apparatuses 200-1, 200-2, ... and 200-n.

The image forming apparatuses 200-1, 200-2, ... and 200-n according to the present embodiment may be connected locally to the host apparatus 100 or shared as a network image forming apparatus having their own IP addresses assigned in a network.

If the image forming apparatuses 200-1, 200-2, ... and 200-n are locally connected to the host apparatus 100, the host apparatus 100 includes the image forming apparatus server 300.

If the image forming apparatuses 200-1, 200-2, ... and 200-n are network image forming apparatuses, the image forming apparatus server 300 is separately provided to administrate at least one of the image forming apparatuses 200-1, 200-2, ... and 200-n. The host apparatus 100 may receive various information of a plurality of image forming apparatuses 200-1, 200-2, ... and 200-n from the image forming apparatus server 300.

According to the exemplary embodiment, a solution is installed in the host apparatus 100 to arrange the plurality of image forming apparatuses 200-1, 200-2, ... and 200-n. The solution may be included in a printer driver according to the type of the image forming apparatuses 200-1, 200-2, ... and 200-n and various applications to extend functions of the image forming apparatuses 200-1, 200-2, ... and 200-n. As shown therein, the host apparatus 100 includes a first user interface unit 110, a first display unit 120, a first storage unit 130, a first communication unit 140, a first controller 150 and an image processing unit 160.

The first user interface unit 110 receives a user's selection regarding a menu to rearrange the plurality of image forming apparatuses 200-1, 200-2, ... and 200-n, and receives a user's input or selection of various rearrangement attribute values to rearrange the plurality of image forming apparatuses 200-1, 200-2, ... and 200-n corresponding to the selected rearrangement menu.

More specifically, the first user interface unit 110 is used to input the rearrangement attribute value to rearrange the plurality of image forming apparatuses 200-1, 200-2, ... and 200-n corresponding to the arrangement management window displayed on the first display unit 120, select a target group which is rearranged among a plurality of groups in which the plurality of image forming apparatuses 200-1, 200-2, ... and 200-n is classified by a predetermined standard, and input an operation option for the plurality of image forming apparatuses 200-1, 200-2, ... and 200-n.

A user may login the plurality of image forming apparatuses 200-1, 200-2, ... and 200-n through the first user interface unit 110. A user may login an administrator mode which enables the user to set and change the overall environment of the image forming apparatuses 200-1, 200-2, ... and 200-n without an additional access limit.

To support the foregoing function, the first user interface unit 110 receives an administrator ID and a password from a user for the login to the administrator mode. The first controller 150 authenticates a user as a system administrator with the input administrator ID and password. A user according to the present embodiment includes an administrator.

The first user interface unit 110 may include a keyboard, a mouse, etc., which is provided as an input device of the host apparatus 100, and a graphic user interface (GUI) generated by an execution of a driver or an additional application and displayed on the first display unit 120 to receive a user's input. The GUI according to the present embodiment includes, for example, an icon, a button, a text input window, etc., which is selectable by a user.

If the first user interface unit 110 includes a GUI, the host apparatus 100 receives a user's input or selection regarding various rearrangement attribute values to rearrange the plurality of image forming apparatuses 200-1, 200-2, ... and 200-n corresponding to the arrangement management window displayed on the first display unit 120 by an execution of a solution to rearrange the plurality of image forming apparatuses 200-1, 200-2, ... and 200-n.

The first display unit 120 displays an arrangement management window for the plurality of image forming apparatuses 200-1, 200-2, ... and 200-n and a plurality of groups. The plurality of groups refers to groups in which the plurality of image forming apparatuses 200-1, 200-2, ... and 200-n is classified by a predetermined standard. Each group includes at least one image forming apparatus.

The plurality of groups may correspond to a plurality of departments in the office. The plurality of groups may be classified by a location in the office or by other various standards.

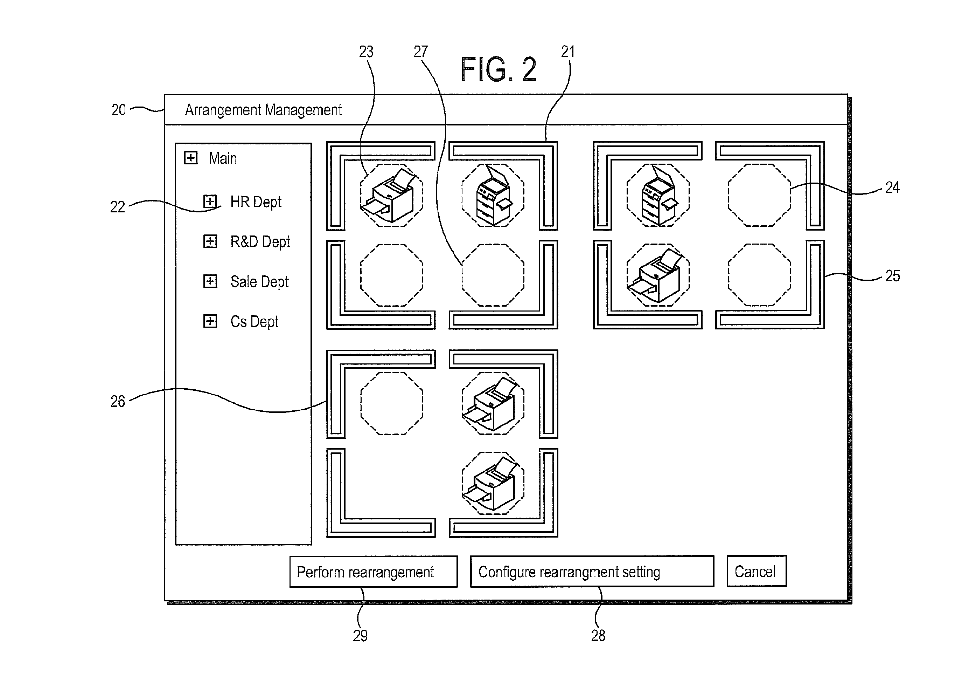

FIGS. 2 to 6 illustrate an example of the arrangement management window according to the exemplary embodiment.

If a user executes a solution to rearrange the plurality of image forming apparatuses 200-1, 200-2, ... and 200-n through the first user interface unit 110, the first display unit 120 may display a current arrangement drawing 20 as the arrangement management window for the plurality of image forming apparatuses 200-1, 200-2, ... and 200-n as in FIG. 2.

As shown therein, the current arrangement drawing 20 displays a location 23 where the plurality of image forming apparatuses 200-1, 200-2, ... and 200-n is arranged by a group 21. A user may confirm a current arrangement status of the image forming apparatuses 200-1, 200-2, ... and 200-n for each selected group by using a group selection button 22 provided within the current arrangement drawing 20.

The current arrangement drawing 20 may display an available location 24 of the image forming apparatuses 200-1, 200-2, ... and 200-n by using a dotted-line box. Referring to FIG. 2, the location of the image forming apparatus 23 which is arranged in an HR Dept. 21 may be changed to an R&D Dept. 25 or a Sales Dept. 26, inter alia, to an available location 24 of the R&D Dept. 25 or the Sales Dept. 26, for example.

A user may add or remove a dotted-line box of the available location 24 by manipulating a button of the mouse as the first user interface unit 110. The current arrangement drawing 20 may display a menu to move or adjust a size of the dotted-line box corresponding to the manipulation of the mouse button. A user may select the menu and move the dotted-line box or adjust the size of the dotted-line box by manipulating the mouse button. An adjustment mode of the dotted-line box may be cancelled by manipulating a predetermined key of the keyboard (e.g., the ESC key). The image forming apparatus 21 may move to another location 27 within the group as the case may be.

As shown in FIG. 2, the current arrangement drawing 20 may include a configure rearrangement setting input button 28 and a perform rearrangement button 29 to rearrange the plurality of image forming apparatuses 200-1, 200-2, ... and 200-n. A user may confirm the current location of the image forming apparatuses 200-1, 200-2, ... and 200-n from the current arrangement drawing 20 displayed as in FIG. 2, and select the configure rearrangement setting input button 28 through the first user interface unit 110 to input various attribute values to thereby perform the rearrangement operation.

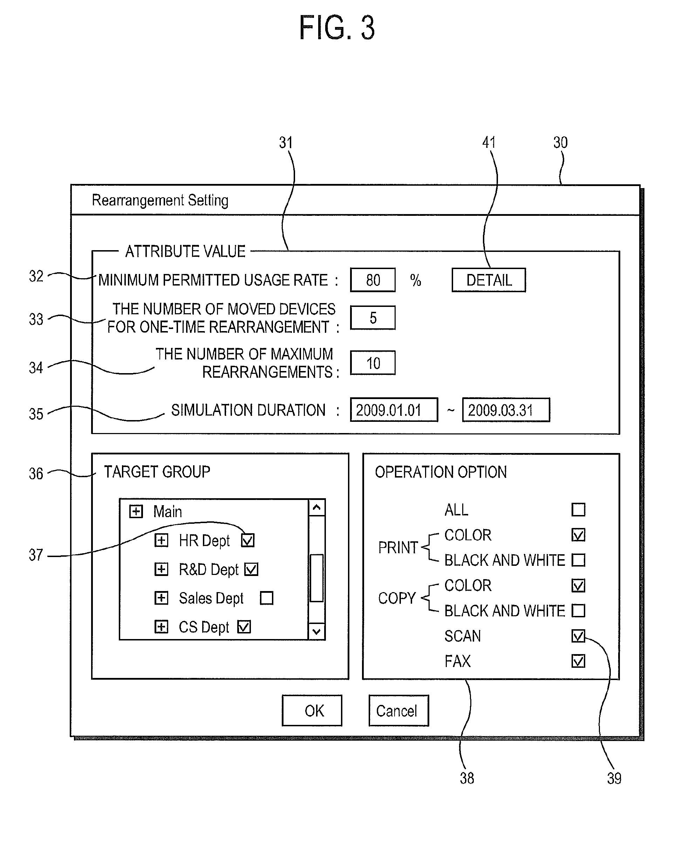

FIG. 3 illustrates an arrangement management window 30 which is displayed on the first display unit 120 corresponding to a selection of the configure rearrangement setting input button 28.

As shown therein, the arrangement management window 30 includes a plurality of menu items to input or select an attribute value 31, a target group 36 and an operation option 38 for a rearrangement setting.

The attribute value menu item 31 includes at least one input window to input various attribute values to perform the rearrangement operation. The rearrangement attribute value may include at least one of a permitted usage rate 32 for a plurality of groups, a number of image forming apparatuses 33 which are concurrently movable for one-time rearrangement, a number of rearrangement simulations 34 and a rearrangement simulation period 35.

The permitted usage rate 32 refers to a permitted usage rate of a group which has the lowest usage rate when the usage rate of a group having the highest number of average output sheets (i.e., a total number of output sheets of the plurality of image forming apparatuses/a total number of the plurality of image forming apparatuses) during a predetermined period (i.e., the rearrangement simulation period 35) is 100%.

For example, 80% of the permitted usage rate refers to a rearrangement performed to make the usage rate of the group having the lowest usage rate equal to or greater than 80% of the usage rate of the group having the highest usage rate. If the usage rate of the group having the lowest usage rate is still lower than 80% of the usage rate of the group having the highest usage rate after one-time rearrangement, the first controller 150 may repeat the rearrangement operation until the usage rate of the group having the lowest usage rate becomes 80% or greater.

The attribute value menu item 31 may further include a detail button 41 for the permitted usage rate as in FIG. 3.

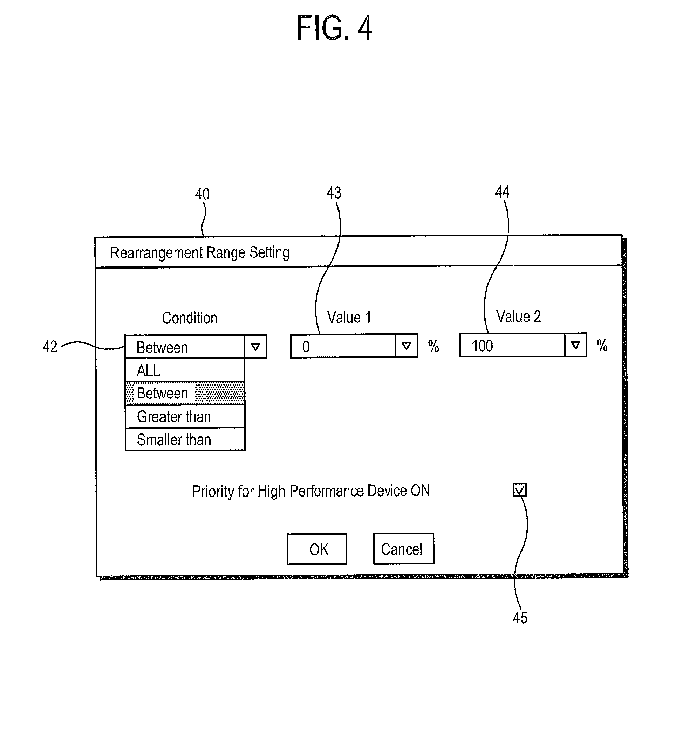

If a user selects the detail button 41 from the arrangement management window 30, the first controller 150 displays a rearrangement range setting window 40 of the permitted usage rate on the first display unit 120 as in FIG. 4.

As shown therein, the rearrangement range setting window 40 may include a dropdown list 42 to select detail conditions and at least one of attribute value input windows 43 and 44.

The detail conditions may include "All", "Between", "Greater than", and "Smaller than". The condition "All" may be set as a default.

Here, the condition "All" refers to a repetitive performance of the rearrangement operation until the permitted usage rate 32 which is input in FIG. 3 is satisfied, regardless of values Value 1 and Value 2 input in the attribute value input windows 43 and 44.

The condition "Between" refers to a rearrangement operation performed by a group whose percentage of average output sheets calculated initially during the rearrangement operation ranges between the Value 1 and Value 2 input in the attribute value input windows 43 and 44 until the permitted usage rate 32 is satisfied.

The condition "Greater than" refers to a rearrangement operation performed by a group whose percentage of average output sheets calculated initially during the rearrangement operation is greater than the Value 1 until the permitted usage rate 32 is satisfied.

The condition "Smaller than" refers to a rearrangement operation performed by a group whose percentage of average output sheets calculated initially during the rearrangement operation is smaller than the Value 1 until the permitted usage rate 32 is satisfied.

The rearrangement range setting window 40 may further include a check box 45 to establish a priority for a high performance device ON. If a user selects the check box 45, the first controller 150 first rearranges a high end device having the highest page per minute (PPM).

A user may set the permitted usage rate 32 variously through the rearrangement range setting window 40 in FIG. 4.

The number of image forming apparatuses permitted to be rearranged 33 shown in FIG. 3 is the number of image forming apparatuses which may be moved concurrently for a one-time rearrangement.

If the number of image forming apparatuses permitted to be rearranged is limited to five units, the first controller 150 rearranges up to five image forming apparatuses concurrently for the one-time rearrangement.

Even if the rearrangement operation is performed one time, the first controller 150 may repeat the rearrangement operation until the usage rate of the group having the lowest usage rate becomes equal to or greater than the permitted usage rate when the usage rate of the group having the lowest usage rate is lower than the permitted usage rate of the group having the highest usage rate.

According to an embodiment, the image forming apparatus is moved from the current group to another group to reduce a difference between usage rates of groups depending on a rearrangement operation.

The number of simulations 34 is the maximum number of permitted simulations if the rearrangement operation is performed plural times according to the exemplary embodiment.

As the number of image forming apparatuses permitted to be rearranged one time is limited (e.g. five units), the rearrangement operation may be repeated plural times to make the usage rate of the group having the lowest usage rate be equal to or greater than the permitted usage rate (e.g., 80%) of the group having the highest usage rate. If the number of simulations 34 is limited to ten times, the first controller 150 performs a plurality of simulations until the usage rate of the group having the lowest usage rate becomes equal to or greater than the usage rate of the group having the highest usage rate. If the usage rate of the group having the lowest usage rate is still lower, after ten simulations, than the minimum permitted usage rate of the group having the highest usage rate, the first controller 150 may suspend the rearrangement operation and notify a user of a result.

The simulation period 35 of the plurality of image forming apparatuses 200-1, 200-2, ... and 200-n corresponds to a collection period of usage amount information received from the plurality of image forming apparatuses 200-1, 200-2, ... and 200-n.

That is, the first controller 150 estimates a usage rate of each group based on usage amount information of the image forming apparatuses 200-1, 200-2, ... and 200-n included in each group during the simulation period 35.

The first controller 150 rearranges the plurality of image forming apparatuses 200-1, 200-2, ... and 200-n to reduce a difference between usage rates of a plurality of groups, based on the estimated usage rates of each group during the predetermined period.

The rearrangement attribute values 32, 33, 34 and 35 as discussed above may be input by a user to each input window or default values may be preset when the rearrangement solution is installed initially.

The target group menu item 36 may include at least one check box 37 to select the rearrangement target group as in FIG. 3.

That is, a user may select a plurality of groups through the first user interface unit 110 among a plurality of groups in the office from the arrangement management window 30 to rearrange the image forming apparatuses.

The first controller 150 performs the rearrangement operation at least one time to reduce the difference between the usage rates of the selected rearrangement target groups.

The target group menu item 36 may further include a check box to select all groups. A default value of the rearrangement solution installed in the host apparatus 100 may be set to select all groups, as the case may be.

The operation option menu item 38 includes at least one check box 39 to select the type of an operation which is a condition of acquiring the usage amount information of the plurality of image forming apparatuses included in the target group as in FIG. 3.

The operation option may include at least one of a color print, a black and white print, a color copy, a black and white copy, a scan output and a fax output.

That is, a user selects the check box through the first user interface unit 110 to select the operation option of the image forming apparatuses which are targets for the acquisition of the usage amount information.

The host apparatus 100 according to the present embodiment may acquire information of the number of output sheets, i.e., the usage amount information corresponding to the particular condition for the image forming apparatuses 200-1, 200-2, ... and 200-n having various operation options, and perform the rearrangement operation based on the acquired usage amount information.

The operation option menu item 38 may further include a check box to select all of the options, and a default value of the rearrangement solution installed in the host apparatus 100 may be set to select all of the options.

If the input and selection of the rearrangement attribute value from the arrangement management window 30 shown in FIG. 3 is completed, a user may rearrange the plurality of image forming apparatuses 200-1, 200-2, ... and 200-n by selecting a perform rearrangement button 29 from the arrangement management window 20 in FIG. 2.

The first controller 150 rearranges the plurality of image forming apparatuses 200-1, 200-2, ... and 200-n corresponding to a selection of the perform rearrangement button 29 of the first user interface unit 110.

The first controller 150 may rearrange the plurality of image forming apparatuses 200-1, 200-2, ... and 200-n to reduce the difference between the usage rates of the plurality of groups based on the usage amount information received from the plurality of image forming apparatuses 200-1, 200-2, ... and 200-n according to the simulation period 35 and the operation option 38 selected in FIG. 3.

The first controller 150 may rearrange the image forming apparatus group having a lower usage rate than the input permitted usage rate among the plurality of image forming apparatus groups or among the image forming apparatuses within the plurality of image forming apparatus groups.

That is, the image forming apparatus within the image forming apparatus group having a lower usage rate may be rearranged in the image forming apparatus group having a higher usage rate.

More specifically, the plurality of groups selected in FIG. 3 is rearranged based on the usage amount information received from the image forming apparatuses 200-1, 200-2, ... and 200-n according to the operation option 38 during the selected usage rate estimation period 35 until the usage rate of the group having the lowest usage rate becomes equal to or greater than the input permitted usage rate input in FIG. 3. The first controller 150 may move the location of the image forming apparatus included in the group having the lowest usage rate to the group having the highest usage rate. The first controller 150 may further move the location of the image forming apparatus included in the group having the lowest usage amount to be adjacent to the image forming apparatus having the highest usage amount among the image forming apparatuses included in the group having the highest usage amount.

If the image forming apparatus in the group having the lowest usage rate is moved to the group having the highest usage rate, particularly to a location adjacent to the image forming apparatus having the highest usage amount, the usage amount may be distributed to each image forming apparatus and the difference between the usage rates of the groups may be reduced after the rearrangement.

The number of image forming apparatuses which are moved concurrently may be limited by the number of image forming apparatuses 33 permitted to be rearranged input in FIG. 3.

The host apparatus 100 according to the exemplary embodiment arranges the image forming apparatus in the available locations 24 and 27 having the dotted-line box during the rearrangement operation. If there is no dotted-line box to be moved, the first controller 150 completes the rearrangement operation.

Otherwise, a dialog box may be displayed on the first display unit 120 during the rearrangement operation to ask a user whether to move the image forming apparatus before the image forming apparatus is moved.

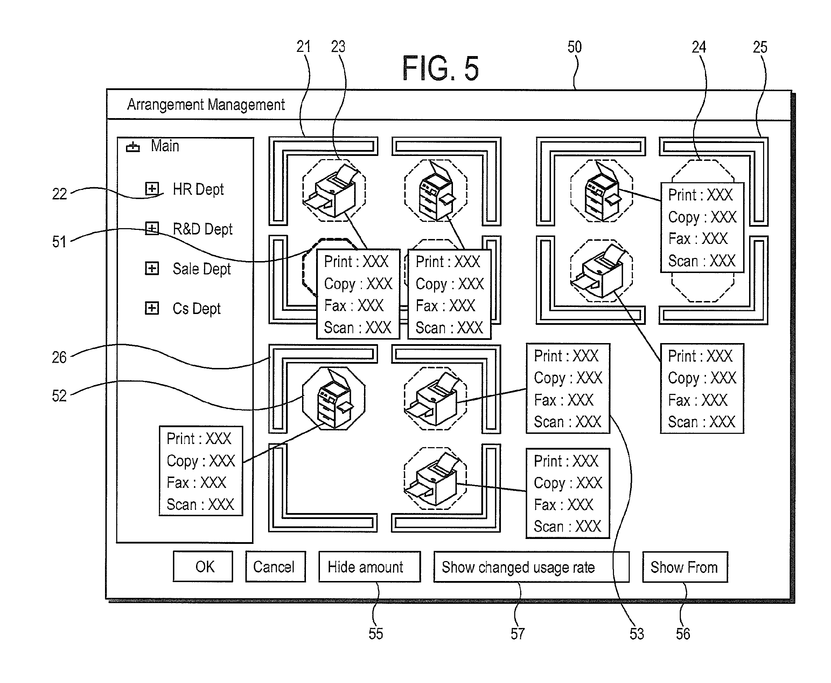

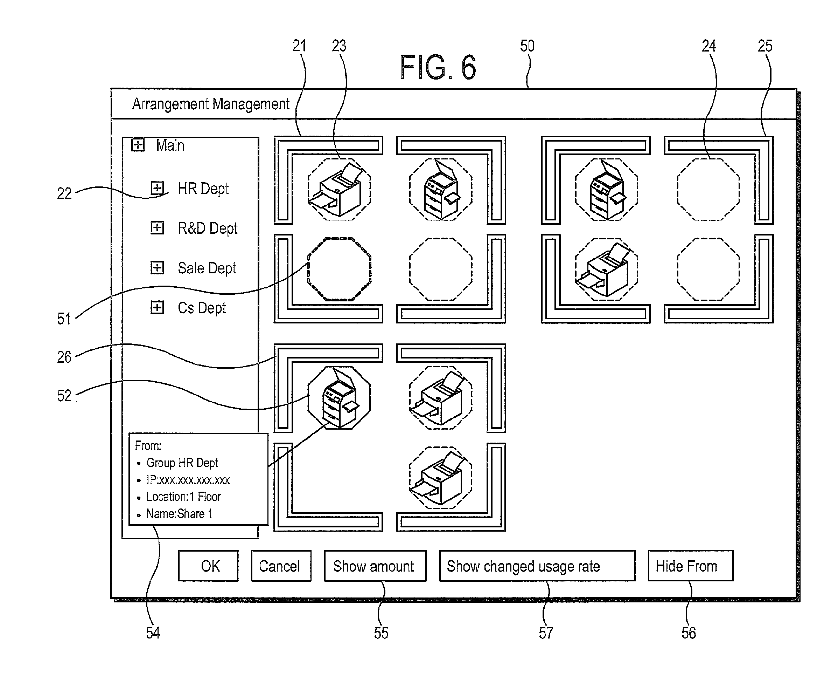

The first display unit 120 displays a rearrangement result as in FIG. 5 or FIG. 6. As shown therein, a rearrangement result window 50 may include at least one icon which separately displays a location 51 before the rearrangement of the image forming apparatus, a location 52 after rearrangement, an available location 24 of the image forming apparatus, usage amount information 53 of the image forming apparatus and inherent information 54 of the image forming apparatus. The usage amount information 53 of the image forming apparatus is usage amount information for each operation option 38. The inherent information 54 of the image forming apparatus may include an IP address and a name of the image forming apparatus, a location of the actual office, sharing information, a location before rearrangement (including the group where the image forming apparatus was previously included) and a location after rearrangement (including a group where the image forming apparatus is newly included) as location movement information of the image forming apparatus.

The rearrangement result window 50 may further include a show amount/hide amount button 55 for the usage amount information 53 of the image forming apparatus, and a show from/hide from button 56 for the inherent information 54 of the image forming apparatus.

A user may select to temporarily display or not display the usage amount information 53 and the inherent information 54 including the location movement information for each image forming apparatus through the first user interface unit 110.

A user may confirm a movement description of the image forming apparatus according to the rearrangement operation through the displayed rearrangement result window 50.

For example, an image forming apparatus at a location 51 which is included in the group 21 having the lowest usage rate in FIG. 2 may be rearranged in the available location 52 of the group 26 having the highest usage rate as in FIG. 5.

The difference between the usage rates of the two groups 21 and 26 is reduced according to the location rearrangement. A user may confirm the movement description of the image forming apparatus by checking the inherent information 54 in FIG. 6.

If the rearrangement result window 50 in FIGS. 5 and 6 corresponds to the result of the one-time rearrangement operation, the usage rate of the group having the lowest usage rate may be lower than the permitted usage rate 32 input in FIG. 3.

Then, the first controller 150 may select whether to rearrange the image forming apparatus again through the first user interface unit 110, and may repeat the rearrangement operation according to a user's selection.

If the usage rate of the group having the lowest usage rate is lower than the permitted usage rate according to the setting result after the rearrangement operation, the first display unit 120 may display a message for a user to select whether to rearrange the image forming apparatus again.

The number of rearrangement operations may be limited by the number of simulations 34 input in FIG. 3.

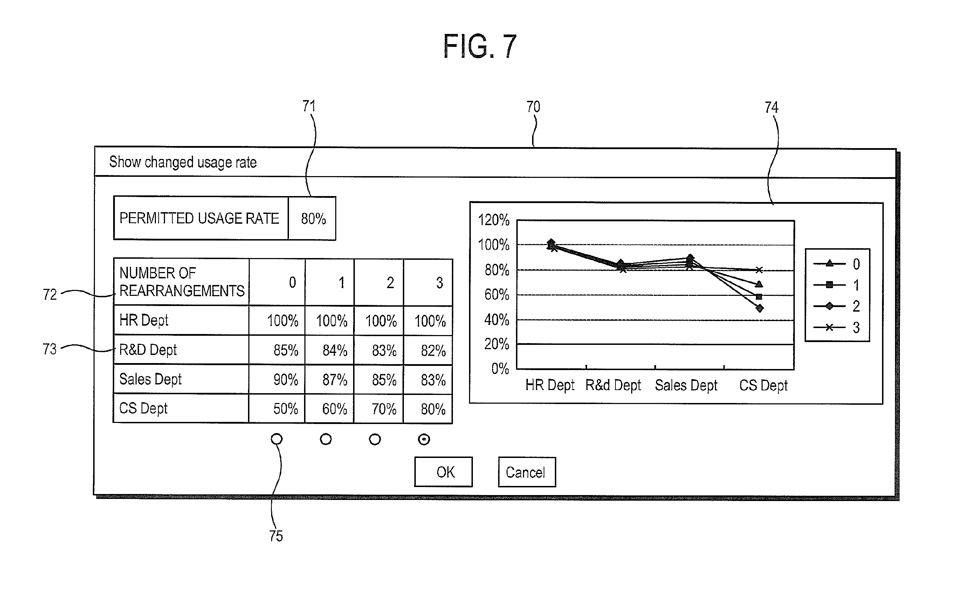

The host apparatus 100 according to the present embodiment may display on the first display unit 120 a simulation result of the usage rates of each group for plural rearrangement operations if the rearrangement operation is repeated plural times. FIG. 7 illustrates the simulation result window 70 of the usage rates of each group according to several rearrangements.

As shown therein, the rearrangement operation according to the present embodiment is performed according to various rearrangement attribute values input in FIGS. 3 and 4, and the usage rate of each group gradually changes according to the number of rearrangements.

More specifically, referring to FIG. 7, the simulation result window 70 may include a permitted usage rate 71 for the plurality of image forming apparatuses, the number of simulations 72, a change value 73 of the usage rate according to the plurality of simulations, and a graph 74 for the change value of the usage rate.

As shown therein, the difference between the usage rates of the groups is reduced by every rearrangement. If the rearrangement operation is performed three times, the usage rate of the group (CS Dept.) which had the lowest usage rate reaches 80% which was input as the permitted usage rate 71.

Accordingly, the host apparatus 100 according to the present embodiment may perform three consecutive rearrangement operations to make the usage rate of the group having the lowest usage rate be equal to or greater than the minimum permitted usage rate input in FIG. 3.

The simulation result window 70 may further include a simulation result selection button 75 to select one of setting results of the plurality of rearrangement operations.

That is, if an increase in the usage amount of the CS Dept. is anticipated even though the usage rates of all groups are 80% or more, which is the permitted usage rate, after three rearrangement operations, a user may select the result of one or two rearrangement operations as the final rearrangement result.

If a user selects one of the plurality of rearrangement results through the first user interface unit 110, the first controller 150 performs a final rearrangement operation according to the selected result.

The various rearrangement attribute values which are input or selected in FIG. 3 are stored in the first storage unit 130. The first storage unit 130 may include an internal or external storage module, such as a hard disk drive (HDD), a flash memory, etc. The first storage unit 130 of the host apparatus 100 according to the present embodiment may further store therein authentication information to authenticate the administrator mode.

The first storage unit 130 further stores therein current arrangement information of the plurality of image forming apparatuses 200-1, 200-2, ... and 200-n, usage amount information received from the respective image forming apparatuses 200-1, 200-2, ... and 200-n and relocation history information according to the rearrangement operation.

The host apparatus 100 according to the present embodiment may transmit the input rearrangement attribute value and the rearrangement result to the image forming apparatus server 300 through the first communication unit 140. The image forming apparatus server 300 may receive information from the host apparatus 100 and store the information therein.

The first communication unit 140 communicates with the plurality of image forming apparatuses 200-1, 200-2, ... and 200-n and the image forming apparatus server 300. More specifically, the host apparatus 100 receives the usage amount information and the inherent information from the plurality of image forming apparatuses 200-1, 200-2, ... and 200-n through the first communication unit 140 during a predetermined period. The first communication unit 140 may continue to receive the usage amount information of the plurality of groups which is classified by a predetermined standard.

To support the foregoing function, a monitoring program may be installed in the host apparatus 100 to acquire the usage amount information. The monitoring program may be included in a rearrangement solution or a printer driver, or may be provided as a separate application. The host apparatus 100 may continue to receive the usage amount information through the monitoring program while receiving and transmitting data with respect to the plurality of image forming apparatuses 200-1, 200-2, ... and 200-n by a predetermined protocol.

The first communication unit 140 may include a wired/wireless communication module which is connected to an external device, such as the image forming apparatuses 200-1, 200-2, ... and 200-n and the image forming apparatus server 300, locally or in a network by a predetermined protocol.

If the rearrangement operation is performed, the first communication unit 140 may transmit the rearrangement result to a user (or an administrator) by email or other means.

The first controller 150 controls the host apparatus 100 as a whole. More specifically, the first controller 150 controls the first display unit 120 to display the arrangement management window for the image forming apparatuses 200-1, 200-2, ... and 200-n and the plurality of groups in which the plurality of image forming apparatuses 200-1, 200-2, ... and 200-n is classified by a predetermined standard if the rearrangement solution for the image forming apparatuses 200-1, 200-2, ... and 200-n is executed.

The displayed arrangement management window includes the current arrangement drawing 20, the arrangement management window 30, the rearrangement range setting window 40, the rearrangement result window 50 and the simulation result window 70 as in FIGS. 2 to 7.

The first controller 150 controls the first communication unit 140 to receive the usage amount information from the plurality of image forming apparatuses 200-1, 200-2, ... and 200-n, and rearranges the plurality of image forming apparatuses 200-1, 200-2, ... and 200-n to reduce the difference between the usage rates of the plurality of groups displayed on the arrangement management window based on the received usage amount information.

The first controller 150 may perform a simulation to rearrange the plurality of image forming apparatuses 200-1, 200-2, ... and 200-n according to the input rearrangement attribute value.

That is, the first controller 150 may rearrange the image forming apparatuses 200-1, 200-2, ... and 200-n according to the permitted usage rate which is input in the arrangement management window 30 in FIG. 3 to make the usage rate of the group having the lowest usage rate equal to or greater than the input permitted usage rate. More specifically, the first controller 150 moves the image forming apparatus included in the group having the lowest usage rate to the group having the highest usage rate, and moves the image forming apparatus included in the group having the lowest usage rate to a location adjacent to the image forming apparatus having the highest usage rate among the image forming apparatuses included in the group having the highest usage rate to thereby reduce the difference between the usage rates of the plurality of groups. The permitted usage rate may vary by detail conditions selected in FIG. 4.

The first controller 150 may perform the rearrangement operation plural times according to the rearrangement attribute value input at the arrangement management window 30 in FIG. 3, i.e., the simulation period, the number of image forming apparatuses permitted to be rearranged, and the number of simulations.

The rearrangement attribute value may include the target group and the operation option. The target group may be selected from FIG. 3. The first controller 150 may acquire information on the number of output sheets corresponding to the operation option selected from FIG. 3, i.e., information on at least one of a color print, a black and white print, a color copy, a black and white copy, a scan output and a fax output of the image forming apparatus, as the usage amount information, and rearrange the plurality of image forming apparatuses to reduce the difference between the usage rates of the plurality of groups based on the acquired usage amount information.

The first controller 150 stores in the first storage unit 130 the rearrangement attribute value and the rearrangement history input or selected in FIG. 3, and controls the first display unit 120 to display the foregoing rearrangement result as in FIGS. 5 or 6.

The first controller 150 may perform the rearrangement operation again if the usage rate of the group having the lowest usage rate is still lower than the minimum permitted usage rate input in FIG. 3 after the rearrangement operation.

The first controller 150 controls the first display unit 120 to display a message asking whether to perform the rearrangement option again, and performs the rearrangement operation again if the rearrangement operation is selected through the first user interface unit 110 corresponding to the displayed message.

The first controller 150 may control the first display unit 120 to display the simulation result of the usage rates of the groups regarding plural times of rearrangement operations as in FIG. 7.

The simulation result window 70 in FIG. 7 is provided to select one of the rearrangement results. If one of the displayed simulation results is selected through the first user interface unit 110, the first controller 150 performs a final rearrangement operation according to the selected rearrangement result.

The first controller 150 stores the rearrangement history in the first storage unit 130. A user may check the rearrangement history or transmit it to the outside through the first communication unit 140 whenever necessary.

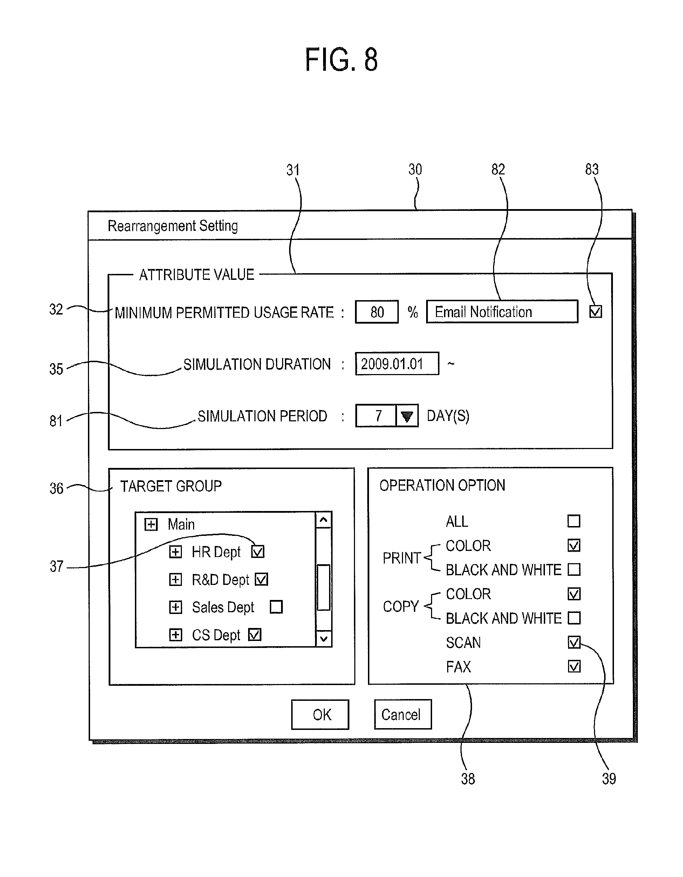

FIG. 8 illustrates an arrangement management window 30 according to another exemplary embodiment.

As shown therein, the arrangement management window 30 according to the other embodiment includes a plurality of menu items to input or select a rearrangement attribute value 31, a target group 36 and an operation option 38. The rearrangement attribute value menu item 31 includes at least one input window to input various attribute values for a rearrangement operation.

The attribute value may include a permitted usage rate 32 with respect to usage rates of a plurality of groups, a simulation duration 35 and a simulation period 81.

If the simulation period 81 is input in FIG. 8, the first controller 150 periodically monitors whether there is a group whose usage rate is lower than the permitted usage rate during a predetermined period among a plurality of rearrangement target groups.

The first controller 150 may periodically monitor the plurality of groups starting from the simulation duration 35 input in FIG. 8.

The arrangement management window 30 in FIG. 8 may further include an email notice button 82 and a check box 83 to select the email notice.

A user may input an email address of an administrator through the email notice button 82, and select the check box 83 to periodically notify an administrator of a monitoring result.

The host apparatus 100 according to the other embodiment may be set to notify an administrator of a monitoring result only when there is a group whose usage rate is lower than a permitted usage rate during a predetermined period among a plurality of groups.

An administrator may input a command through the first user interface unit 110 to perform a rearrangement operation to make the usage rate of the group having the lowest usage rate equal to or greater than the permitted usage rate corresponding to the monitoring result.

The image processing unit 160 generates print data in a predetermined print language according to a print command input through the first user interface unit 110. The generated print data are transmitted to one of the plurality of image forming apparatuses 200-1, 200-2, ... and 200-n through the first communication unit 140.

The image forming apparatuses 200-1, 200-2, ... and 200-n receive the print data from the host apparatus 100 to perform a print operation.

As shown in FIG. 1, the image forming apparatuses 200-1, 200-2, ... and 200-n each include a second storage unit 230 which stores therein print data, usage amount information and inherent information of the image forming apparatuses, a second communication unit 240 which communicates with the host apparatus 100, a second controller 250 which controls the image forming apparatus as a whole and an image forming unit 260 which performs a print operation based on the received print data. The second controller 250 controls the second communication unit 240 to transmit the usage amount information of the image forming apparatuses 200-1, 200-2, ... and 200-n to the host apparatus 100 or the image forming apparatus server 300.

As shown in FIG. 1, if the image forming apparatus server 300 is provided separately, the image forming apparatus server 300 receives various information including the usage amount information from the plurality of image forming apparatuses 200-1, 200-2, ... and 200-n through a third communication unit 340. The third controller 350 stores in a third storage unit 330 the usage amount information received from the plurality of image forming apparatuses 200-1, 200-2, ... and 200-n.

The host apparatus 100 is connected to the image forming apparatus server 300 through the first communication unit 140 and receives the usage amount information during a predetermined period.

If a rearrangement solution is executed through the first user interface unit 110, the first controller 150 displays on the first display unit 120 an arrangement management window for the plurality of image forming apparatuses 200-1, 200-2, ... and 200-n and a plurality of groups in which the plurality of image forming apparatuses 200-1, 200-2, ... and 200-n is classified by a predetermined standard, rearranges the plurality of image forming apparatuses 200-1, 200-2, ... and 200-n to reduce a difference between usage rates of the plurality of groups based on the received usage amount information and displays a rearrangement result on the first display unit 120.

The host apparatus 100 may transmit the foregoing rearrangement result to the image forming apparatus server 300 through the first communication unit 140. The image forming apparatus server 300 stores in the third storage unit 330 a setting history, including the received rearrangement result.

The host apparatus 100 may monitor whether there is a group whose usage rate is lower than a minimum permitted usage rate during a predetermined period among a plurality of groups by periodically being connected to the image forming apparatus server 300, and notify an administrator of a monitoring result through the first communication unit 140.

The host apparatus 100 according to the present embodiment may efficiently rearrange the image forming apparatuses 200-1, 200-2, ... and 200-n in a proper location based on the usage amount information of the plurality of image forming apparatuses 200-1, 200-2, ... and 200-n, and automatically rearrange the image forming apparatuses 200-1, 200-2, ... and 200-n to reduce the difference between the usage rates of the plurality of groups in which the plurality of image forming apparatuses is classified according to a predetermined standard for convenient maintenance of the image forming apparatus.

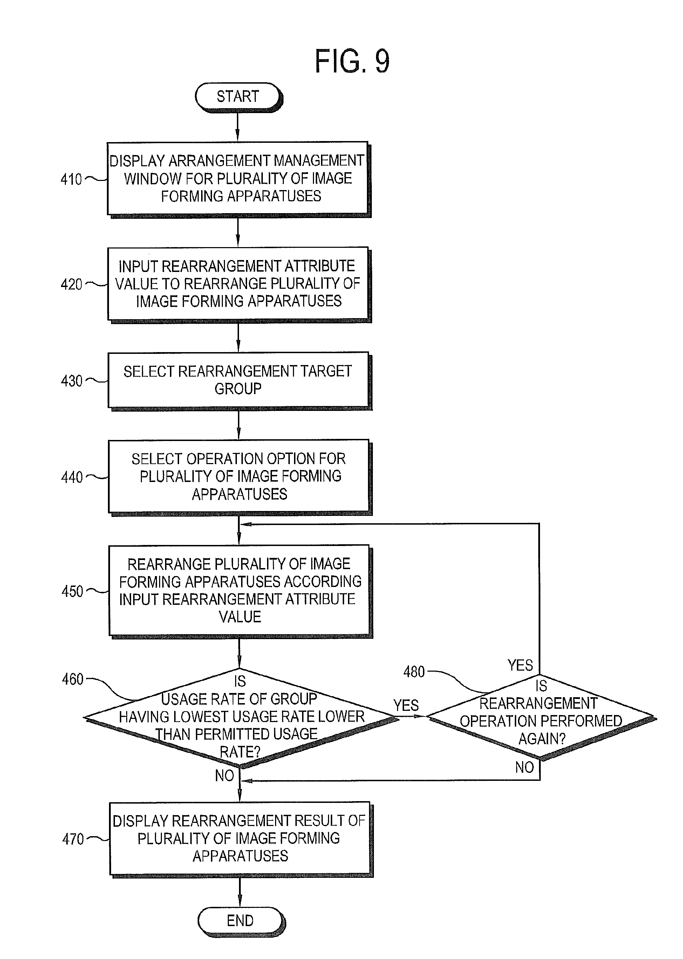

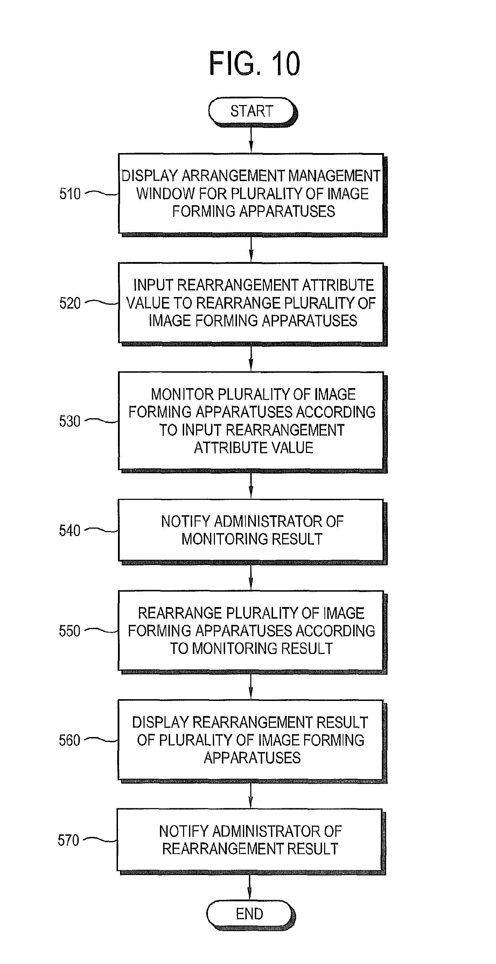

In the image forming system 10 with the foregoing configuration, the rearrangement process of the plurality of image forming apparatuses will be described with reference to FIGS. 9 and 10 hereinafter.

As shown therein, the host apparatus 100 may display the arrangement management window for the plurality of image forming apparatuses 200-1, 200-2, ... and 200-n corresponding to the execution of the rearrangement solution (410). The arrangement management window may include the current arrangement drawing 20 in FIG. 2, the arrangement management window 30 in FIG. 3 and the rearrangement range setting window 40 in FIG. 4.

Corresponding to the arrangement management window at operation 410, the host apparatus 100 receives the rearrangement attribute value through the first user interface unit 110 (420). The rearrangement attribute value may include at least one of the permitted usage rate, the simulation duration, the simulation period, the number of simulations, and the number of image forming apparatuses permitted to be rearranged.

A plurality of rearrangement target groups is selected from the plurality of groups in which the plurality of image forming apparatuses is classified by a predetermined standard (430).

The host apparatus 100 may select the operation option for the plurality of image forming apparatuses 200-1, 200-2, ... and 200-n (440). The operation option may include the number of output sheets corresponding to at least one of the color print, the black and white print, the color copy, the black and white copy, the scan output and the fax output as a condition of acquiring the usage amount information of the image forming apparatuses included in the rearrangement target group.

The operations 430 and 440 may be included in the operation 420. That is, the rearrangement attribute value may further include a group in which the image forming apparatus is included, and the operation option of the plurality of image forming apparatuses.

The first controller 150 rearranges the plurality of image forming apparatuses 200-1, 200-2, ... and 200-n according to the rearrangement attribute value input at operations 420 to 430 (450). The first controller 150 may perform the rearrangement operation to reduce the difference between the usage rates of the rearrangement target groups, and may perform the rearrangement operation to make the usage rate of the group having the lowest usage rate equal to or greater than the permitted usage rate input at operation 120. The first controller 150 may rearrange the image forming apparatus group having a lower usage rate than the input permitted usage rate among the plurality of image forming apparatus groups or rearrange the image forming apparatus group having a lower usage rate than the input permitted usage rate among the image forming apparatuses within the plurality of image forming apparatus groups. The rearrangement of the image forming apparatus group having a lower usage rate than the permitted usage rate refers to a rearrangement of the image forming apparatus within the image forming apparatus group having a lower usage rate in relation to the image forming apparatus group having a higher usage rate. If the number of rearrangement target image forming apparatuses is plural, the image forming apparatuses selected at operation 430 are rearranged.

The first controller 150 determines whether the usage rate of the group having the lowest usage rate is lower than the permitted usage rate input at operation 420 according to the result at operation 450 (460).

If it is determined at operation 460 that there is no group having a lower usage rate than the permitted usage rate, the rearrangement operation is completed, and the first controller 150 displays the rearrangement result of the plurality of image forming apparatuses on the first display unit 120 (470). The rearrangement result may be displayed like the rearrangement result window 50 as shown in FIGS. 5 and 6, and may separately display at least one of the location of at least one image forming apparatus before and after rearrangement, an available location of at least one image forming apparatus, inherent information of at least one image forming apparatus, and usage amount information of the image forming apparatus.

If it is determined at operation 460 that there is a group whose usage rate is lower than the permitted usage rate, a user may select whether to perform the rearrangement operation again (480).

If a user selects to perform the rearrangement operation again, the host apparatus 100 performs the rearrangement operation again at operation 450.

If a user selects not to perform the rearrangement operation again, the host apparatus 100 completes the rearrangement operation and displays the rearrangement result on the first display unit 120 (470). The first display unit 120 may separately display at least one of the location of at least one image forming apparatus before and after rearrangement, the available location of at least one image forming apparatus, inherent information of at least one image forming apparatus and the usage amount information of the image forming apparatus. The host apparatus 100 according to the present embodiment may perform a rearrangement simulation for the plurality of image forming apparatuses at operations 450 to 480 according to the rearrangement attribute value input at operations 420 to 440, and display the rearrangement result as at operation 470 by rearranging the plurality of image forming apparatuses according to the simulation result. The first controller 150 performs the simulations as much as the number of simulations input at operation 420 to satisfy the permitted usage rate input at operation 420.

Referring to FIG. 10, the host apparatus 100 according to the present embodiment may display the arrangement management window for the plurality of image forming apparatuses 200-1, 200-2, ... and 200-n corresponding to the execution of the rearrangement solution (510). The arrangement management window may include the arrangement management window 30 in FIG. 8.

Corresponding to the arrangement management window at operation 510, the host apparatus 100 receives the rearrangement attribute value through the first user interface unit 110 (520). The rearrangement attribute value may include at least one of the permitted usage rate, the simulation duration, the simulation period, the number of simulations, the group in which the image forming apparatus is included, the operation option of the plurality of image forming apparatuses and the number of image forming apparatuses permitted to be rearranged.

The host apparatus 100 may monitor whether there is a group whose usage rate is lower than the minimum permitted usage rate during a predetermined period (simulation period) among the plurality of groups according to the rearrangement attribute value input at operation 520 (530). The host apparatus 100 may receive the usage amount information from the plurality of image forming apparatuses 200-1, 200-2, ... and 200-n or from the image forming apparatus server 300.

The monitoring result at operation 530 is notified to an administrator by email or other method (540).

The host apparatus 100 performs the rearrangement operation to reduce the difference between the usage rates of the rearrangement target groups if there is a group whose usage rate is lower than the minimum permitted usage rate during a predetermined period among the plurality of groups according to the monitoring result at operation 530 (550).

The performance of the rearrangement at operation 550 may include operations 450, 460 and 480 in FIG. 9.

The host apparatus 100 displays on the first display unit 120 the rearrangement result of the plurality of image forming apparatuses (560).

The host apparatus 100 may notify an administrator of the rearrangement result displayed at operation 570 by email or other method through the first communication unit 440.

According to the exemplary embodiment, the host apparatus 100 may efficiently rearrange the plurality of image forming apparatuses in a proper location based on the usage amount information of the plurality of image forming apparatuses 200-1, 200-2, ... and 200-n, and automatically rearrange the image forming apparatuses to minimize the difference between the usage rates of the plurality of groups in which the plurality of image forming apparatuses is classified by a predetermined standard, thereby providing convenience in maintaining the image forming apparatuses.

As described above, a host apparatus connected to a plurality of image forming apparatuses and a rearrangement setting method thereof according to the present embodiment may efficiently rearrange the plurality of image forming apparatuses in a proper location based on usage amount information of the plurality of image forming apparatuses.

Also, a host apparatus connected to a plurality of image forming apparatuses and a rearrangement setting method thereof according to the present embodiment automatically rearranges the plurality of image forming apparatuses to minimize a difference between usage rates of the plurality of groups in which the plurality of image forming apparatuses are classified by a predetermined standard and provides convenience in maintaining the image forming apparatuses.

Although a few exemplary embodiments have been shown and described, it will be appreciated by those skilled in the art that changes may be made in these exemplary embodiments without departing from the principles of the invention, the scope of which is defined in the appended claims.

## Claims

1. A rearrangement setting method of a plurality of image forming apparatuses of a host apparatus connected to the plurality of image forming apparatuses, the method comprising:
displaying at the host apparatus a current arrangement drawing of the plurality of image forming apparatuses and an arrangement management window of the plurality of image forming apparatuses;
inputting a rearrangement attribute value at the arrangement management window to rearrange the plurality of image forming apparatuses;
performing a simulation according to the input rearrangement attribute value to rearrange the plurality of image forming apparatuses; and
rearranging the plurality of image forming apparatuses according to a simulation result.

2. The method according to claim 1, wherein the rearrangement attribute value comprises at least one of a permitted usage rate, a simulation duration, a simulation period, a number of simulations, a group comprising at least one image forming apparatus, an operation option of the plurality of image forming apparatuses, and a number of image forming apparatuses permitted to be rearranged.

3. The method according to claim 2, wherein the rearrangement is performed with respect to an image forming apparatus group which has a lower usage rate than the permitted usage rate among a plurality of image forming apparatus groups or the image forming apparatuses within the image forming apparatus groups having a lower usage rate.

4. The method according to claim 3, wherein the rearranging the image forming apparatus group having a lower usage rate than the permitted usage rate comprises rearranging the image forming apparatus within the image forming apparatus group having a lower usage rate, in an image forming apparatus group having a higher usage rate.

5. The method according to claim 3, wherein if the number of the rearrangement target image forming apparatuses is plural, the selected image forming apparatuses are rearranged.

6. The method according to claim 3, wherein the simulation is performed as much as the input number of simulations to satisfy the input permitted usage rate.

7. The method according to any one of claims 1 to 6, wherein the rearranging comprises separately displaying at least one of locations of at least one image forming apparatus before and after the rearrangement, an available location of at least one image forming apparatus, inherent information of at least one image forming apparatus, and usage amount information of at least one image forming apparatus.

8. The method according to any one of claims 1 to 6, further comprising:
monitoring the image forming apparatus according to the input rearrangement attribute value; and
notifying a monitoring result.

9. A host apparatus which is connectable to a plurality of image forming apparatuses, the host apparatus comprising:
a display unit which displays thereon a current arrangement drawing of the plurality of image forming apparatuses and an arrangement management window of the plurality of image forming apparatuses;
a user interface unit which is used to input a rearrangement attribute value through the arrangement management window to rearrange the plurality of image forming apparatus;
a storage unit which stores therein the input rearrangement attribute value; and
a controller which performs a simulation according to the input rearrangement attribute value to rearrange the plurality of image forming apparatuses, rearranges the plurality of image forming apparatuses according to a simulation result and controls the display unit to display a rearrangement result thereon.

10. The host apparatus according to claim 9, wherein the rearrangement attribute value comprises at least one of a permitted usage rate, a simulation duration, a simulation period, a number of simulations, a group comprising the image forming apparatus, an operation option of the plurality of image forming apparatuses, and a number of image forming apparatuses permitted to be rearranged.

11. The host apparatus according to claim 10, wherein the controller rearranges an image forming apparatus group which has a lower usage rate than the permitted usage rate among the plurality of image forming apparatus groups or the image forming apparatuses within the image forming apparatus groups having a lower usage rate.

12. The host apparatus according to claim 11, wherein the rearrangement of the image forming apparatus group which has a lower usage rate than the permitted usage rate comprises a rearrangement of the image forming apparatus within the image forming apparatus group having the lower usage rate, in an image forming apparatus group having a higher usage rate.

13. The host apparatus according to claim 11, wherein if the number of the rearrangement target image forming apparatuses is plural, the selected image forming apparatuses are rearranged.

14. The host apparatus according to claim 11, wherein the controller performs the simulation according to an input number of simulations until the input permitted usage rate is satisfied.

15. The host apparatus of any one of claims 9 to 14, wherein the display unit separately displays at least one of locations of at least one image forming apparatus before and after the rearrangement, an available location of at least one image forming apparatus, inherent information of at least one image forming apparatus, and usage amount information of at least one image forming apparatus.
